# EUROPEAN PATENT APPLICATION

(11) **EP 2 518 637 A1**
(43) Date of publication of application: **31.10.2012**
(21) Application number: 12154446.4
(22) Date of filing: 22.12.2006
(51) Int. Cl.: G06F 15/16, G06F 21/00, H04L 29/06, H04N 21/8545, H04N 21/4788, H04N 21/462, H04L 29/08

(54) **System and method for cross-domain social networking**

(30) Priority: 22.12.2005 US 752814 P; 31.08.2006 US 824199 P
(62) Divisional of application: 06848096.1
(71) Applicant: Catalog.Com, Inc., Oklahoma City OK 73134 (US)
(72) Inventor: Crull, Robert Wayne, Edmond, OK 73034 (US); Miller, Bill Cody, Arlington, TX 76016 (US); Kenney, Andrew Blinn, Oklahoma City, OK 73134 (US); Martin, Thad Thomas, Norman, OK 73072 (US)
(74) Representative: Peterreins, Frank

(57) **Abstract**

Social networking systems and processes include cross-domain functionality. Requests for access to websites coupled to an authentication system may be received. Whether a user is logged on to the authentication system may be automatically detected. The authentication system may allow a user to be logged on to a second website coupled to the authentication system on a different domain when the user is logged on to the first website. A webpage may be presented that allows a user to log on if the user is not logged on. At least a portion of a webpage may be based on user information.

## Description

### REFERENCE TO RELATED APPLICATIONS

This application claims the benefit of U.S. Provisional Patent Application Serial No. 60/752,814, entitled "SYSTEM AND METHOD FOR CROSS-DOMAIN SOCIAL NETWORKING" filed on December 22, 2005, and to U. S. Provisional Patent Application Serial No. 60/824,199, entitled "SOCIAL NETWORK-ENABLED INTERACTIVE MEDIA PLAYER" filed on August 31, 2006, the entire contents of which are hereby incorporated by reference.

### TECHNICAL FIELD

This invention relates to online networks, and more particularly to a social network utilizing cross-domain infrastructures.

### BACKGROUND

Social networking, a term first coined in 1954, refers to the social structure among individuals and/or organizations and explains ways in which members connect and interact through various social familiarities. Research in a variety of academic areas has demonstrated the critical role social networks play on various levels (personal to international) in developing norms and behaviors of individuals within the social network.

In the age of the Internet, social networking also refers to a category of online applications designed to connect individuals (e.g., friends, business partners, potential mates) using virtual communities. Hundreds of social networking sites currently exist (noted examples include Friendster, MySpace, Xanga, Facebook and LinkedIn). The popularity of these sites is experiencing exponential growth. For example, in early 2005 MySpace reported receiving more "page views" than Google.

These virtual communities grow and expand virally, capable of spreading rapidly through preexisting social networks. The typical structure includes an initial set of founders or members who invite members of their own personal networks (tangible and virtual) to join the virtual community or site. New members repeat the process, often resulting in an explosive growth in total network members. Most sites offer standard features, such as address book updates, viewable profiles, etc., but are fairly limited in design and structure. Explosive growth often adversely affects availability and operability of such sites.

Targeted networks, as the name suggests, are virtual communities designed to appeal to a targeted audience, typically one with like-minded interests. Examples are numerous and are as diverse as the human condition. Representative examples include antique car enthusiasts, CPAs, singles interested in dating, Christian rock-and-roll music fans, scrapbook enthusiasts, left-handed people, Golden Retriever owners, fan clubs, and the like.

Merely providing a forum for like-minded individuals does not suffice to be a successful social network. To be successful, a network must offer relevant and dynamic content, clearly define its purpose and community, facilitate and promote interaction between its members, and stimulate its members to generate content and recruit new members.

While social networks are clearly here to stay, they all suffer from the rapid entrance of numerous competitors and associated member-retention issues. As members quickly jump from network to network, the "hot" social network of today is often doomed to be the "has-been" social network of tomorrow.

### SUMMARY

A social network may include a series of websites on more than one domain. A user may be able to view a number of websites as a logged in user without having to re-enter log on information on each website visited even if the websites are on more than one domain.

In one general aspect, a request from a user for access to a first website coupled to an authentication system may be received. Whether the user is logged on to the authentication system may be automatically determined. The authentication system may automatically allow the user to be logged on to a second website coupled to the authentication system and on a different domain from the first website when the user is logged on to the first website. A first webpage on the first website configured to allow the user to log on to the authentication system may be presented if the user is not logged on. A second webpage on the first website based at least in part on user information may also be presented, where at least a portion of content of the second webpage is based on an authorization status of the user.

Implementations may include one or more of the following features. The user may be automatically logged out of the authentication system after a predetermined period of time. A third webpage associated with the second webpage may be presented where at least a portion of content of the second webpage is based on the authorization status of the user. The first webpage may be the second webpage with an embedded portion that allows the user to log on to the authentication system. The second webpage may include messages for the user.

A user on the first website may communicate with a second user on the second website. A user on the second website may be allowed to communicate with a second user on the second website. A user may be a member of at least one social network group. A user may communicate with other users in a particular one of the social network groups. The social network may include a plurality of nodes. Each node may include a plurality of users. A user may communicate with a second user in the same node as the user and/or in a different node from the user. A peer group of a user may be determined based on the user identification, and at least a portion of the website may be generated based on the peer group. The authentication system may be at least partially stored remotely. Determining whether a user is logged on to the authentication system may include transmitting an HTTP call to the authentication system, determining whether a cookie is stored on the user's system that indicates the authorization status of the user, and/or determining if a cookie comprising the authorization status of the user exists on the domain of the first website. A request for access to a third website associated with the authorization system may be received from a user and the user may be automatically logged on to the third website.

One feature of the system may include encouraging and facilitating a long term relationship between members and the network. Another feature may include offering unique features and functionality that compliment a virtual community experience. Another feature may include allowing users to maintain a connection to a social network while allowing the user to build a website on any domain.

The details of these and other aspects and implementations of the disclosure are set forth in the accompanying drawings and the description below. Features, objects, and advantages of the various implementations will be apparent from the description and drawings, and from the claims.

### DESCRIPTION OF DRAWINGS

FIG 1 is an example of a social network infrastructure.
FIG 2 is an illustration of a social network.
FIG 3 is a flowchart of an example of a process for allowing a user to access a website.
FIG 4A is an example of an authentication cookie.
FIG 4B illustrates another example of an authentication cookie.
FIG 5 is a flowchart of another example of a process for allowing a user to access a website.
FIG 6 is a screenshot of an example of an embedded log on portion of a website.
FIG 7 is a flowchart of an example process for using a session ID.
FIG 8 is an example login process.
FIG 9 is an example login tool on a keymaster domain.
FIG 10 is an example of server interceptor process.
FIG 11 is an example keymaster tool.
FIG 12 is an example keychecker tool.
FIG 13 is an example keyslave tool.

Like reference symbols in the various drawings indicate like elements.

### DETAILED DESCRIPTION

Systems and processes for cross-domain social networking may include simplified login/authentication procedures for members, participation in sites regardless of hosting source or location (e.g., domain), and member ownership and control of the member's domain identity. The social networking system may provide the infrastructure for a large number of sites on the Internet (or other network) without regard to the hosting of those sites. Sites associated with the network may be hosted by different providers and/or from geographically remote locations and still enjoy all of the benefits of the network.

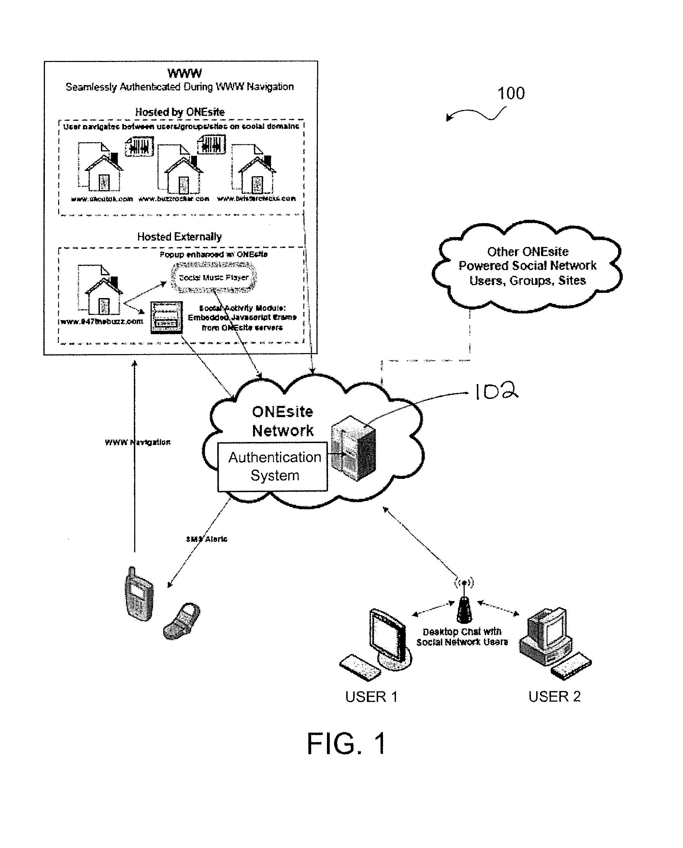

FIG 1 illustrates the primary hardware components of an example of a social network system 100. Users may access Network A through various types of computers, such as laptops, personal computers, and/or mobile devices. User 1 may access Network A via a terminal coupled to a server coupled to Network A. User 2 may access Network A via a personal computer. Smart phones and/or Personal digital assistants (PDAs) may be used to access Network A also. User computers may be coupled to Network A via a bus (e.g., serial, parallel, USB, or FireWire) or network protocols (e.g., TCP/IP, HTTP, XML, WiFi, etc.).

Network A may include various websites hosted by Network A, such as a webaddress1, webaddress2, and webaddress3. Network A may include various websites, such as webaddress 4, hosted by another domain, such as Network B, and include at least a portion from Network A. For example, a Javascript frame may be coupled to and/or provided by Network A. In addition, Network A may be coupled to remote systems that include social networks hosted by other users, groups, and/or sites. Network A, Network B, and/or other remote systems may include a computer system and/or groups of computer systems.

An authentication system may be included in Network A or at least a portion of the authentication system may be stored remotely (e.g., on a different domain hosting server). An authentication system may include a database or other listing to facilitate log on of a user. An authentication system may be a centralized logon system and/or process that allows users to logon to a first website and visit other websites coupled to the authentication system as a logged on user without reentering logon information.

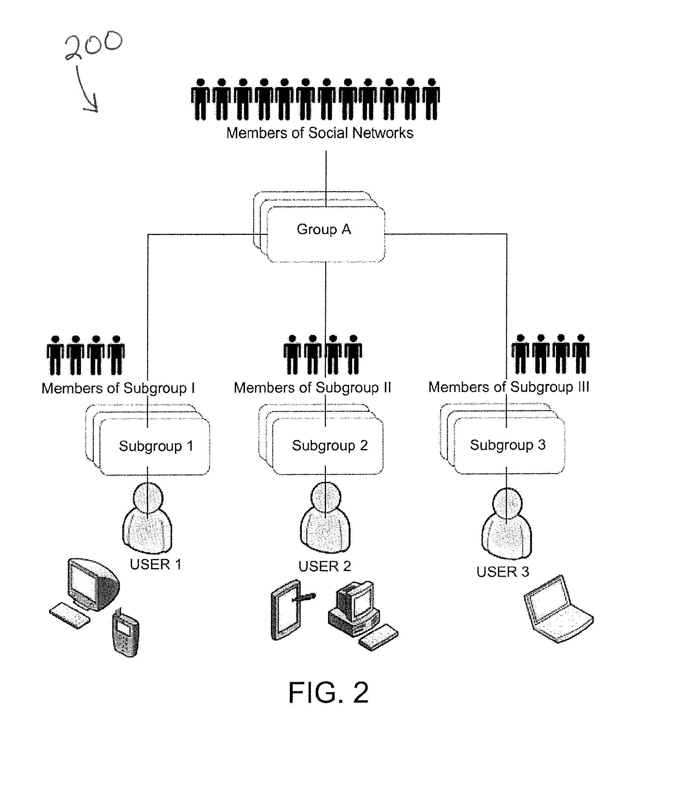

A user may use the system and processes to access and/or participate in various social networks. FIG 2 illustrates an example of a social network 200. A social network may include a plurality of members. The members may submit user information, such as User ID, password, email address, phone number, gender, age, age range, height, weight, place of residence, career, employer, hobbies, or interests when registering for inclusion in a social network. At least a portion of the members may form a group, such as Group A. A group may represent members with common user information, such as gender, hobbies, or interests. A group may be formed by members, social network administrators, a company (e.g., radio station, musical group, manufacturer, etc.). A group (or subgroup) may be formed as a marketing tool for the company. A group may include various subgroups further categorizing members of a group. Subgroups may also be formed by members, social network administrators, and/or companies. For example, Group A may represent Big XII Sports Fans, Subgroup I may represent Texas A&M Football Fans, Subgroup II may represent Big XII North Sports Fans, and Subgroup III may represent Big XII basketball fans. Inclusion in a subgroup may be voluntary. Members of a subgroup may access the social network via computer systems such as personal computers, laptops, smart or cellular phones, and/or personal digital assistants.

For example, User 1, User 2, and User 3 are members of Group A. However, User 1 is a member of Subgroup I, User 2 is a member of Subgroup II, and User 3 is a member of Subgroup III. When User 1 is on a website associated with Group A, User 1 is able to communicate (e.g., instant message, post messages, and/or ping) with other members of Group A. When User 1 is on a website associated with Subgroup I, User 1 may not be able to communicate with members of Group A that are not also members of Subgroup I, such as User 2 and/or User 3. In some implementations, User 1 may be able to communicate with members of Group A that are not members of Subgroup I while accessing a website associated with Subgroup I. Allowing messaging to members of the Group but not the Subgroup of the website being accessed may promote interest in the Subgroup, promote interest in websites associated with the Subgroup, and/or promote membership in the Subgroup. In some implementations, a determination of which members a user may communicate with may be based on the group and/or subgroups to which the user belongs, the type of computer the user is using to access the websites (e.g., laptop versus smart phone), and/or other user information.

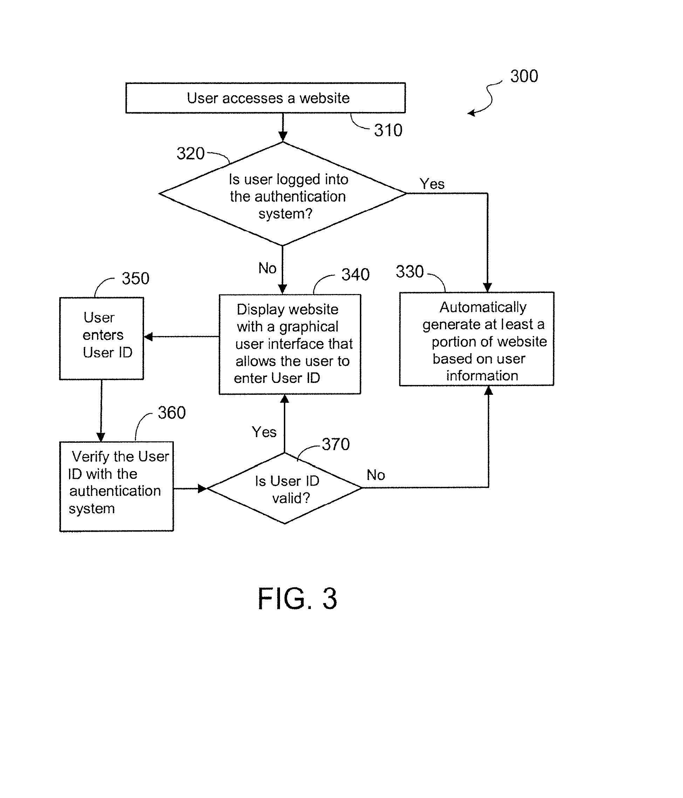

FIG 3 illustrates an example process 300 for accessing a website for social networking. Regardless of the particular hardware or software architecture used, process 300 is generally capable of accessing websites for social networking, such as via a computer or upon request from a user as illustrated in FIG 1. The following description of the flowchart illustrating process 300 focuses on the operation of system 100, or its components or sub-modules, in performing one of their respective methods or processes.

However, system 100 contemplates using any appropriate combination and arrangement of logical elements implementing some or all of their described functionality. A user may access a website (operation 310). For example, a user may access a website via a personal computer, a laptop, a PDA, and/or a smart phone. The website may be a home page of the social network, the user's home page, or a website on a different domain. The website may be coupled to an authentication system. The authentication system may allow centralized login to several websites in the social network. In some implementations, a user may access the social network via: (1) the home page of the social network (or a sub-domain or subspace within it); (2) the user's personal home page on another domain; or (3) another user's home page on a separate domain.

A determination may be made whether the user is logged on the authentication system (operation 320). For example, the authentication system may be accessed to determine if the user is logged on the authentication system. As another example, it may be determined if the user has a cookie on the user's computer that indicates the user is logged on the authentication system.

If the user is logged on to the authentication system, then at least a portion of the website may be generated based on the user information (operation 330). For example, messages for the user may be displayed on the website. As another example, the user's avatar may be displayed on a portion of the website. A portion of the website may allow the user to post messages to other members of group(s) or subgroup(s) of the social network to which the user belongs.

If the user is not logged onto the website, the website may include a graphical user interface that allows the user to enter User ID information (operation 340). For example, the website may include a pop-up window or a portion of a webpage with a logon section. User ID information may include a password, a user name, a user email address, etc. User ID information may also include two-factor type authentication information by using a secure token device based on the security level selected for the website and/or authentication system. The security level may be selected by the social network or by users. A user may enter user ID information (operation 350) on the website or a portion of the website. For example, a user may enter a user ID (e.g., an email address, a self-selected string of characters, etc.) and/or a password.

The User ID may be verified with the authentication system (operation 360). Although the authentication system may be remote to the website being accessed, the user may not be aware that the User ID is verified by a remote authentication system. A determination may be made whether the User ID is valid (operation 370). The authentication system and/or a system hosting the website may determine whether the User ID is valid. For example, the User ID provided by a user may be compared to information in a database of an authentication system.

If the User ID is not valid, the website may be displayed with a graphical user interface that allows the user to enter the User ID (operation 340). The website may include a message indicating all or a portion of the User ID is invalid. If the User ID is valid, at least a portion of the website may be automatically generated based on user information (operation 330). For example, at least a portion of user information available on an authentication system or in another memory (e.g., repository) coupled to the website may be retrieved.

In some implementations, users may utilize a certificate and a public/private key type setup for authentication of users rather than a User ID or credential authentication. For example, a Public Key Infrastructure (PKI) approach may be implemented.

Website(s) that implement the described systems and processes may be hosted by the social network, or may connect to the network via the addition of some common code to its site. The latter option is accomplished via server-side code to run on an external web server, or via HTML and/or JavaScript to allow for certain functionality on the site. It is noted that the interoperability of sites with the larger social network described may be implemented as described above, or by any other means now known or later developed.

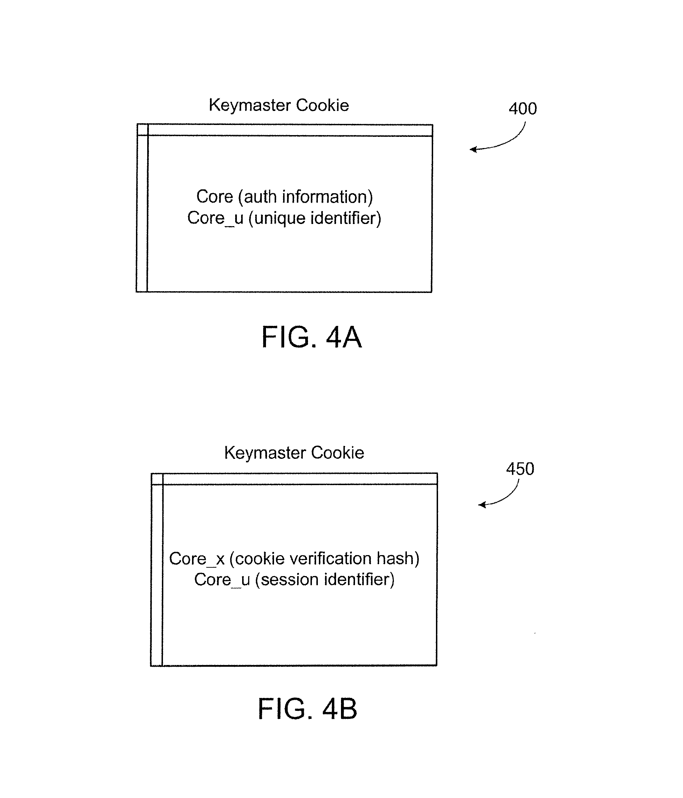

In some implementations, to determine whether a user is logged on to the authentication system, a determination may be made whether a cookie exists on the user's computer and/or on the website being accessed that indicates the user is logged on to the authentication system. FIG 4A illustrates an example of a cookie 400 that includes authentication information and a unique identifier. Authentication information may authenticate that a user is logged on to the authentication system. A unique identifier may identify a user and/or user information. Cookie 400 may be duplicated on other websites as a user accesses various sites.

FIG 4B illustrates an example of a cookie 450 that includes a session ID and a cookie verification signature or hash value. Cookie 450 is used to access websites in the social network (e.g., via process 700). The cookie verification could be implemented using a hash or an encryption algorithm that uses various user information to verify that the cookie is from the user indicated in cookie 450 and/or that cookie 450 has not been stolen, forged, spoofed, or otherwise misappropriated by another person. The cookie verification could be an optional feature for increased security that may be enabled by the user website(s), or the network.

Examples of user information that may be used with cookie 450 includes a cookie verification hash (e.g., SHA-1 or md5 of the session ID) a session ID, the user's browser type, part of the user's IP address, and a secret key.

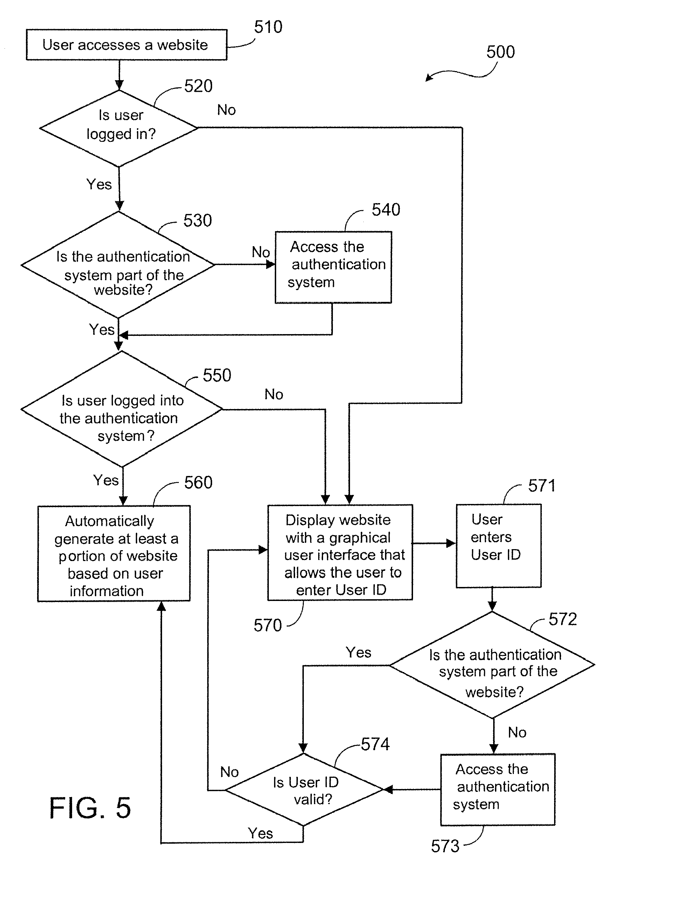

FIG 5 illustrates an example process 500 for accessing a website of a social network.

Regardless of the particular hardware or software architecture used, process 500 is generally capable of accessing websites for social networking, such as via a computer or upon request from a user as illustrated in FIG 1.

The following description of the flowchart illustrating process 500 focuses on the operation of system 100, or its components or sub-modules, in performing one of their respective methods or processes. However, system 100 contemplates using any appropriate combination and arrangement of logical elements implementing some or all of their described functionality. A user may access a website (operation 510). For example, a user may type a URL of a website into a web browser. A determination may be made whether the user is logged in (operation 520). For example, it may be determined if a cookie exists on the user's computer that indicates if the user is logged on or not logged on. As another example, other means may be used to store the information similar to the information stored in cookies 400, 450 on the user's computer. Using a browser plug-in or a custom browser on the client or the user system, the same or similar information in cookies 400, 450 could be stored and utilized across the system.

A determination may be made whether the authentication system is a part of the website (e.g., a portion of the system hosting the website) (operation 530). If the system is not a part of the website (e.g., remote system, a server coupled to the website, a database coupled to the website, etc.), then the authentication system may be accessed (operation 540). The authentication system may be accessed via one or more network protocols (e.g., TCP/IP, HTTP calls, XML messages, etc.).

A determination may be made whether the user is logged on to the authentication system (operation 550). For example, user information may be compared to a database. A database may include a listing of user information, logged on users, valid cookies, valid session IDs, etc. If the user is logged onto the authentication system, a portion of the website may be automatically generated at least partially based on user information (operation 560). For example, user information may be accessed from the authentication system and/or a memory coupled to the website. As another example, a portion of the website may be generated automatically based on the groups and/or subgroups to which the user belongs. A portion of the website may be automatically generated based on the age of the user.

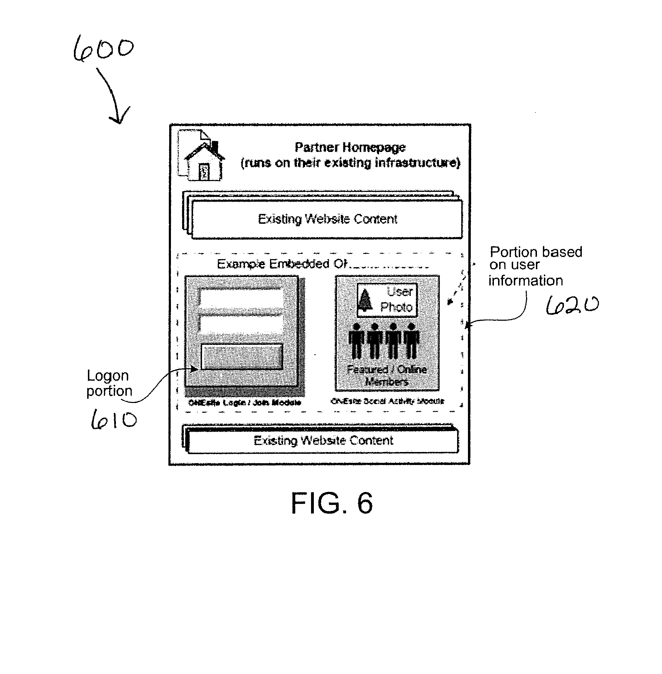

If a determination is made that a user is not logged on to the website, then a website with a graphical user interface that allows the user to enter User ID may be displayed (operation 570). For example, a pop-up, a frame, or an embedded portion may be included in the website for a user to enter User ID. The pop-up, frame, or embedded portion may be generated by the authentication system, in some implementations. FIG 6 illustrates an example, of an embedded portion of a website 600. The embedded portion may include logon fields 610. The logon fields may not be displayed if a determination is made that the user is logged on. The embedded portion may include a photo or an avatar of the user, listings of a portion of the members (e.g., members of a logged on user's group) 620, logged on members, listings of members a user commonly communicates with, and/or a selected group of members. A user may enter a User ID into the graphical interface on the website (operation 571). A determination may be made whether the authentication system is part of the website (operation 572). The authentication system may be accessed if the authentication system is not a part of the website (operation 574).

A determination may then be made whether the User ID is valid (operation 573). For example, if the authentication system a part of the domain hosting the website, then a User ID may be compared to information in the authentication system. As another example, if the authentication system is a remote system, then an XML message may be sent to the authentication system to determine if the User ID is valid.

If the User ID is not valid, then a website with a graphical interface that allows the user to enter User ID may be displayed (operation 570). If the User ID is valid, then at least a portion of the website may be automatically generated based on user information (operation 560).

In some implementations a single login procedure for member interaction across all domains in the network may be provided. A single logon procedure may allow members to interact with the social network from several domains within the network. For example, a member may not be required to re-authenticate her- or himself as s/he moves from site to site within the network. Seamless access to the websites of the social network contributes to the overarching goal of the feel of an actual community, even if the sites reside on different domains.

Employing the simplified cross-domain login procedure (e.g., single logon procedure), the user may be securely authenticated a single time and, upon successful authentication, is thereafter able to gain a predetermined level of access to various sites of the social network without the need to re-authenticate. In some implementations, a "timing-out" function may be provided to limit access to a specified period of time (e.g. parental controls, to allow updates to software, etc.) and/or to automatically log a user out after a specified period of time (inhibiting others from gaining access to others information, etc.), if desired.

In some implementations, authentication may be allowed at the home page of the social network (or a sub-domain or subspace within it); the user's personal home page on another domain; and/or another user's home page on a separate domain. Transparent authentication may be allowed (e.g., a user may not be aware that the log on status of a user is verified). Access to a plurality of social networking functions at a website without re-authenticating during a given session may be allowed. Variations in social features access may depend on the page(s) visited and the user's levels of permission in access resources on the given page of the social network. The level of permission may be obtained from the authentication system. Transparent authentication may be facilitated based on IP address, browser type, and other pseudo-unique identifiers. Proxy IPs or rotating IP ranges may also be accommodated.

Although authentication of a user's logon status has been described in terms of verifying User ID information with information in a database of the authentication system, various methods may be employed to allow authentication of a member such as individual domain cookie, third party cookie, common code snippet, common authentication call via central site or a combination thereof.

When using an individual domain cookie, cookies are stored for a predetermined period of time on the network site's domain and sub-domains to ensure expedited authentication for the member to the network. Upon visiting another domain within the social network for the first time, the member is transparently (e.g., without the user's knowledge) redirected to the central network page where the system determines whether he/she is logged into the network as a whole. This is determined via a cookie. If the user is logged into the network a temporary cookie is created at the destination domain to store login information. In some implementations, regardless of the entry point a member takes, a cookie may be created on the network, and the cookie is subsequently stored on each domain of the network that a user visits to allow for quick access.

When using third party cookies, cookies may be stored (e.g., encrypted and signed cookies) in a third party cookie that is readable and useable by all sites.

When using common code snippets, common code is utilized on all sites within the network to allow for common authentication and checking via a central authentication server, gateway, or database. Central authentication may function behind the scenes with many servers in a load sharing or round-robin fashion, but appears to the various sites of the network as a central authority on authentication.

When using common authentication call, sites participating in the network may elect to utilize a simple HTTPS call to a common central website to determine if a user is authenticated on the social network or to perform the user authentication.

In some implementations, other methods of verifying whether the user is logged on the authentication system may be utilized such as Java Applets and Flash protocols. A session ID may be used. For example, a keymaster coupled to the website or authentication system may assign session IDs to users. The session ID may also be stored in the authentication system. As a user visits websites coupled to the authentication system, the session ID(s) for a user may be retrieved from a user's computer to verify whether the user is logged on to the system. The session ID may be replicated on the websites visited by the user. A session ID may identify a computer (e.g., using MAC addresses) and/or a user to inhibit other nonauthorized users from using the session ID. A session ID may be assigned to users that are not logged in and/or to users that are logged in to the authentication system. Use of social networks may be tracked using the session IDs and usage information may be tracked and/or targeted advertising may be distributed based on the information. In some implementations, a session ID may be a cookie on the user's computer and/or websites coupled to the authentication system.

A session ID may be a unique identifier of a user and/or a user's computer. When session IDs are assigned, the authentication system may be accessed to determine that the session ID has not already been assigned to a different user and/or user computer. A session ID may be randomly assigned to users to inhibit other people from obtaining session IDs without authorization from the authentication system. For example, if a user tries to access the social network using a session ID associated with a different computer and/or user, the authentication may fail and the user may need to re-login and/or restricted from accessing the social network. After a specified number of failed attempts, a session ID may be invalidated by an authentication system, and a new session ID may need to be assigned to a user and/or a user's computer to obtain access to the social network. A session ID may be invalidated and/or a new session ID may be generated when a user performs various tasks, such as creating a new password, joining a new subgroup of the social network, and/or shuts down the user computer.

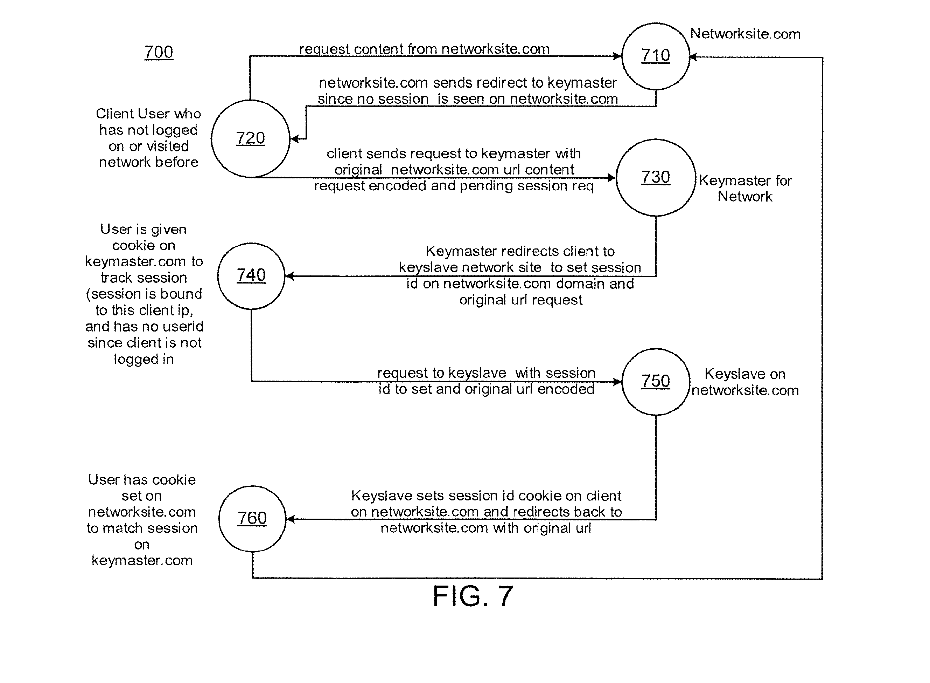

FIG 7 illustrates an example system using a session ID to determine if a user is logged on to an authorization system. Content is requested from a network site 710 (e.g., networksite.com) by a user computer such as a client computer system 720. For example, a user on a cellular phone may request content from networksite.com. Networksite.com 710 may transmit a signal to the client computer system 720 that indicates that the request should be redirected to an authentication system, such as a keymaster 730 for the network, since the session is not seen on networksite.com 710 (e.g., since the session ID is not recognized by networksite.com or the user does not have a session ID). The client computer 720 then sends a request to the keymaster 730 with the original content request (e.g., request for content from networksite.com) encoded and a session request (e.g., a request for a session ID). The keymaster 730 redirects the client to a keyslave network site 740 to set a session ID on the networksite.com domain and transmits the original content (e.g., URL) request. The client computer 720 and/or the user may be given a cookie (e.g., session ID) by the keymaster network site 740 to track the session and provide access to various sites as a logged on user. A request may be sent to the keyslave 750 coupled to networksite.com 710 that includes the cookie or session ID and original content request (e.g., original URL encoded in the request). The keyslave 750 may set the session ID cookie on the client computer 720 and/or on the networksite.com to match the session ID on the keymaster 730. The keyslave may redirect the user to the original content request and website requested, such as the networksite.com website 760. The user may now have a cookie (e.g., session ID) set on networksite.com to match the session ID on the keymaster and thus be logged on to networksite.com. As the client computer 710 requests the original content and/or new content from the networksite.com, the content may be displayed to the user as a logged on user, since a valid session ID now exists for the user on networksite.com.

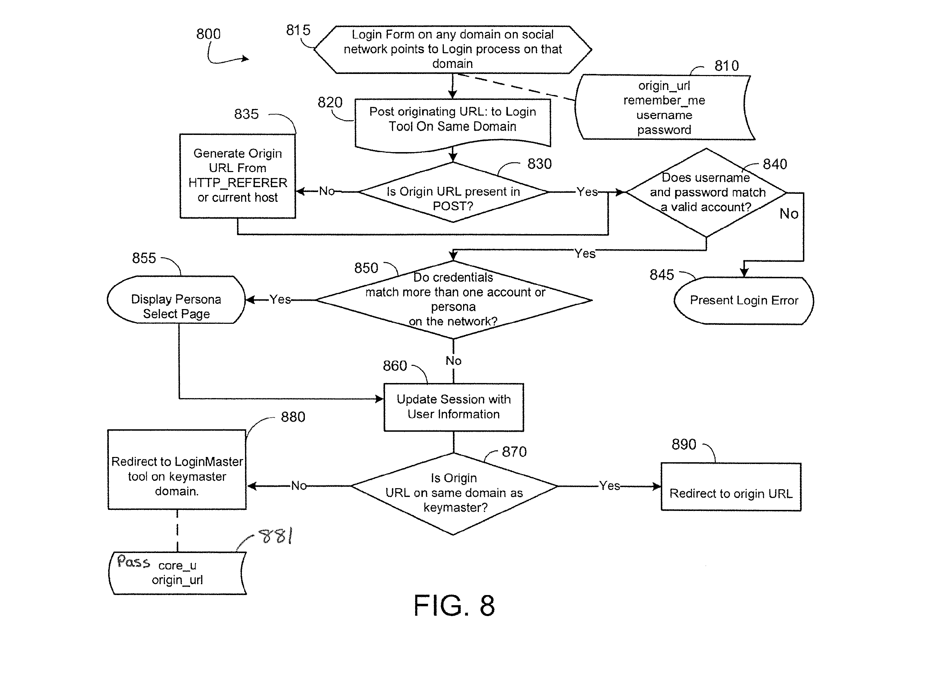

FIG 8 illustrates an example process 800 for logging on to a website using a session ID. A user attempts to logon via a form (which could be pop-up, portion of page, inline frame, toolbar, etc.) from any domain in or associated with the network (operation 815). The user may input information 810 such as username, password, and/or whether the system should remember the user. The originating URL is posted by login form. The login form could post the originating URL to a login tool on the same domain on which login is requested (operation 820). Whether originating URL was posted may be determined (operation 830). If the originating URL was not posted, then the originating URL is generated from the information present, such as the HTTP referrer or current host (operation 835). Whether the username and the password (e.g., user credentials) match a valid account is determined (operation 840). If username and/or password are not valid, then user is presented with a login error (operation 845) and given another chance to login. User may be provided with options to have their password emailed or a hint provided (e.g., if user can provide other key user information).

If the user is authenticated (e.g., user credentials are valid), then a determination is made whether user credentials match more than one account or persona on the network (operation 850). If more than one account or persona matches, then user is given a chance to select an account or a persona (operation 855).

After selecting an account or a persona or if credentials do not match more than one account or persona, the session is updated with the user information (operation 860). Whether the origin URL is on the same domain as the keymaster domain may be determined (operation 870). A domain in the social network may be the keymaster for other domains in the social network. If the user's origin URL is on the keymaster domain, then user is redirected to the origin URL (operation 890). The described process may be transparent to the user and the transition to the requested origin URL in a logged-in state may appear seamless to the user. If the user's origin URL is not on the keymaster domain, then the user is redirected to the LoginMaster tool on the keymaster domain (operation 880) and the session ID (e.g., core_u and origin URL will be passed to the keymaster domain (operation 885).

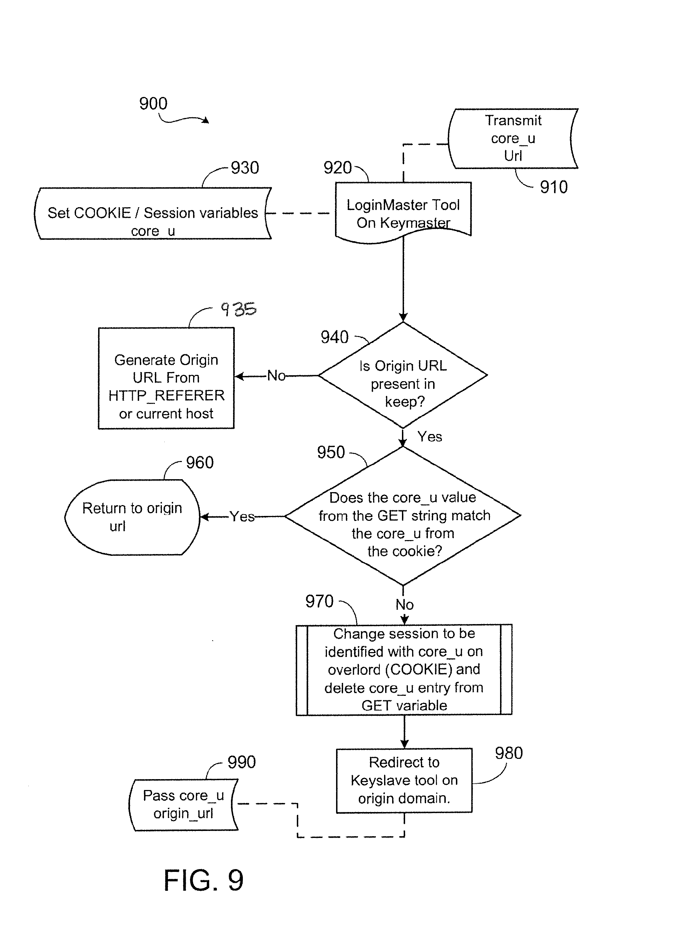

FIG 9 illustrates an example process 900 of the LoginMaster tool on the keymaster domain 920. Core_u (e.g., session ID) and origin URL may be transmitted (operation 930) to the LoginMaster tool (operation 910). A cookie may be set as a core_u depending on previous user activities (operation 930). Whether origin URL was provided in a GET to keymaster may be determined (operation 940). If an origin URL is not provided, then the origin URL is generated from the HTTP-REFERRER and current host (operation 945). After an origin URL is generated or presented, whether the core_u value from the GET string matches the cookie, if present, is determined (operation 950). If core_u cookie is present and matches core_u provided, then the user is returned to the origin URL (operation 960). If a non-matching core_u cookie is present, then user is associated with the core_u cookie on the keymaster domain and the core_u input (GET) is deleted from GET variable (operation 970. User is then redirected to the keyslave tool on the origin domain (operation 980) and the core_u and origin URL are passed to the origin domain (operation 990).

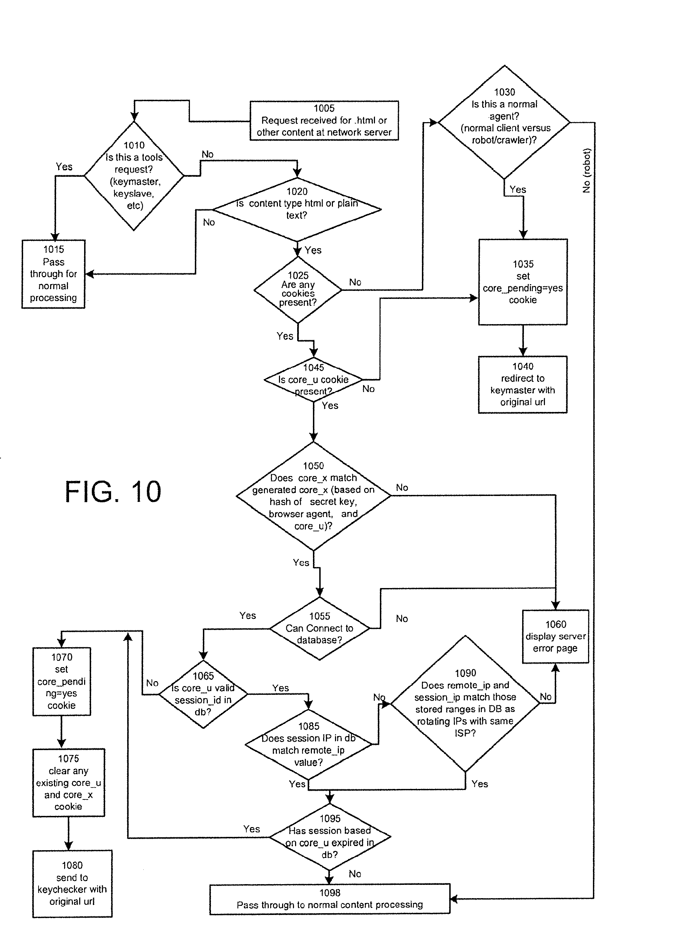

When using the session IDs, when content is requested from a server, the server will intercept the request (e.g., via filter, server module, program wrapper, or another method), and make a determination as to actions that should be taken prior to or while providing requested content. FIG 10 illustrates process 1000 for using session IDs. When a user requests content from a network domain (operation 1005) whether the request is a tool request (e.g., keymaster, keyslave, keychecker, login, LoginMaster, etc.) is determined (operation 1010). If the request a tool request, then the request passes through for normal processing (e.g., is processed without checks) (operation 1015). If the request is not a tool request, then whether the content type requested is html or plain text is determined (operation 1020). For example, some content types necessitate a check of the user status and thus content type may be determined.

If the request is not html or plain text, then the content is processed normally (operation 1015). If the request is html or plain text, and it is protected content, then a determination (operation 1025) is made whether cookies are present (operation 1025). If cookies are not present, whether the browser type is a normal agent is determined (operation 1030). If the browser type is a normal agent, then a core_pending cookie is set to yes or true (operation 1035) and user is redirected to keymaster tool with the origin URL (operation 1040). If the agent type is not normal, then the agent is assumed to be a robot, crawler, or other automated client and is passed through for normal anonymous content processing (operation 1098).

If cookies are present whether a core_u cookie is present is determined (operation 1045). If core_u cookie is not present, the core_pending cookie is set to yes (operation 1035) and the user is redirected to keymaster with the original URL (operation 1040). If a core_u cookie is present (operation 1040), then whether the core_x (e.g., cookie verification hash) matches the generated core-x from core_u cookie, browser type, and secret key is determined (operation 1050). If core_x does not match a generated core_x, then a server error page is displayed (operation 1060). A core_x not matching a generated core_x may indicate a hacker attempt, a user who did not accept the cookies from the network, or another security setting blocking the network.

When core_x and generated core_x match, then whether the user can connect to an authentication database may be determined (operation 1055). If the data base cannot be accessed, user is given an error page (operation 1060).

If authentication database is accessible, then whether the core_u matches a valid session_id in the database may be determined (operation 1065). If core_u does not match a valid session ID, then a core_pending is set to yes or true as a cookie (operation 1070). Then any existing core_u and core_x cookies are cleared (operation 1075). User is redirected to keychecker on origin domain passing on origin URL (operation 1080).

If core_u is valid session ID is found (operation 1065), then whether the user IP address stored when the session was generated (session IP) matches the current IP address (remote IP) of the user is determined (operation 1085). Class C matching or matching the first three octets of the IP address may be used for sites that use a subnet for a proxy. If the remote IP does not match the session IP, then whether remote IP and session IP match stored ranges in the database that correspond to the same ISP from a database of ISPs that utilize rotating proxy IP addresses (e.g., AOL) (operation 1090). If session IP and remote IP do not match with stored ranges, then the user is presented with a server error page (operation 1060).

If session IP and remote IP match stored ranges, then whether the session expired is determined (operation 1095). Session lifetimes can be set based on network or user security preferences. If the session has not expired, then the user content request is passed through to normal content processing (operation 1098). If the session has expired, operations 1070-1080 may be performed.

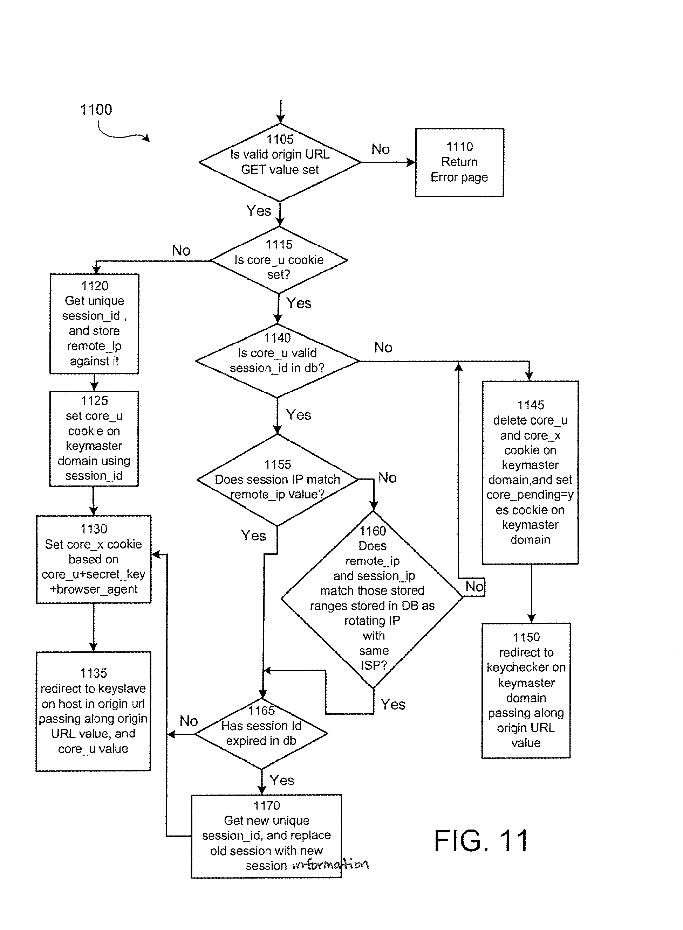

FIG. 11 illustrates a process 1100 for the keymaster tool on the keymaster domain. Whether valid origin URL GET value has been set is determined (operation 1105), and if not an error page is returned (operation 1110). If an origin URL GET value is set, then whether a core_u cookie has been set is determined (operation 1115). If a core_u cookie is not set, then a unique session ID is generated and the remote IP address of the user and session ID are stored in the session database (operation 1120). The core_u cookie is set on the keymaster domain as the session ID (operation 1125). A cookie verification value core_x is also generated using a common hash algorithm and the core_u (e.g. session ID) agent type, and a secret key (operation 1130). The cookie is stored and may include user IP address to increase security if the user is not using a rotating or changing proxy IP address. Other values from the client or shared server values may be used to generate a cookie verification hash to increase security or provide other enhancements. The user is then redirected to the keyslave on the host in origin URL and the core_u value and origin URL values are passed the to the keyslave (e.g., transmitted via network protocols) (operation 1135).

If a core_u cookie value is set, then whether the core_u is a valid session ID in the database is determined (operation 1140). If the core_u is not a valid session ID, then the user's core_u and core_x cookie on the keymaster domain are deleted and core_pending is set to yes or true (operation 1145). The user is then redirected to keychecker on the keymaster domain and the origin URL is passed to the keychecker (e.g., transmitted) (operation 1150).

If a valid session ID for the core_u cookie is found, then whether the session IP address stored in the database matches the user's remote IP address is determined (operation 1155). If the remote IP address does not match the session, then determination is made whether the remote IP and session IP match the range stored in a database of ISPs that utilize rotating proxy IP addresses (operation 1160). If session IP and current user IP do not match the stored range, then core_u and core_x are deleted and core_pending is set to yes or true (operation 1145) and user is redirected to the keychecker on the keymaster domain (operation 1150).

If the remote IP and session IP match or are from the same known rotating proxy IP, then whether the session ID has expired is determined (operation 1165). If the session ID has not expired, then the core_u cookie is set on the keymaster domain (operation 1125) and operations 1130 and 1135 are performed.

If the session ID has expired, then a new unique session ID is generated and the old session ID information is replaced in the database with the new session information (operation 1170). Then the core_u cookie is set on the keymaster domain as the session ID (operation 1125) and operations 1130 and 1135 are performed.

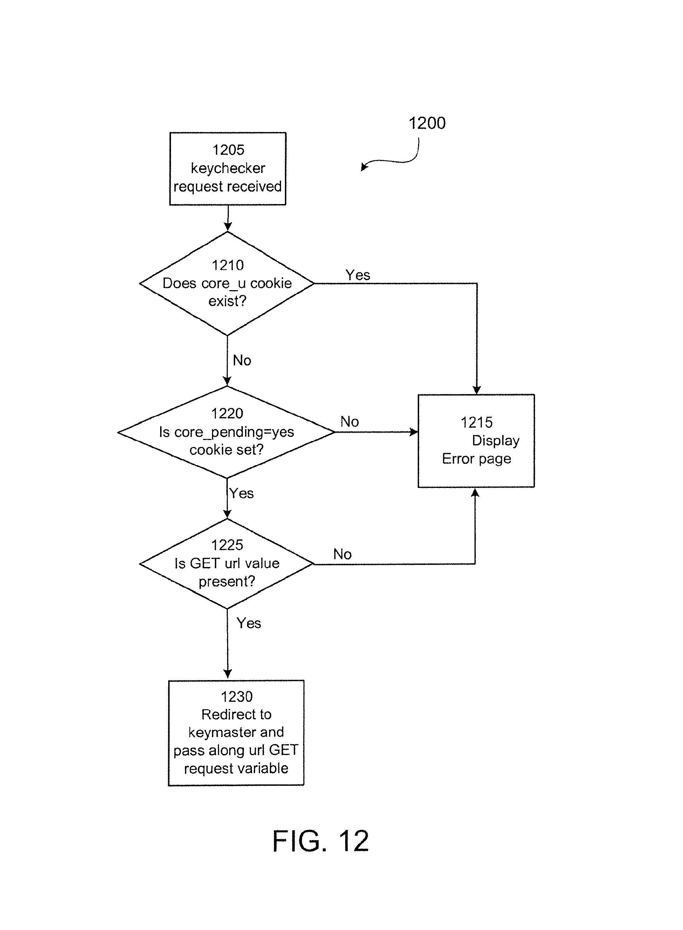

FIG. 12 illustrates a process 1200 for the keychecker tool that resides on a network domain (e.g., keymaster or non-keymaster). A keychecker request is received (operation 1205) and a determination is made whether a core_u cookie exists (operation 1210). If a core_u cookie does exist then a problem has been detected and the user is given an error page (operation 1215). If a core_u cookie does not exist, then a determination is made whether core_pending cookie is set as true (operation 1220). If core_pending is not true (e.g., yes), then the user is given an error page (operation 1215). If core_pending is true, then a determination is made whether a GET URL value is present (operation 1225). If a GET URL value is not present, then user is given an error page (operation 1215). If a GET URL value is present, the user is redirected to keymaster and GET URL request variable is passed to the keymaster (operation 1220).

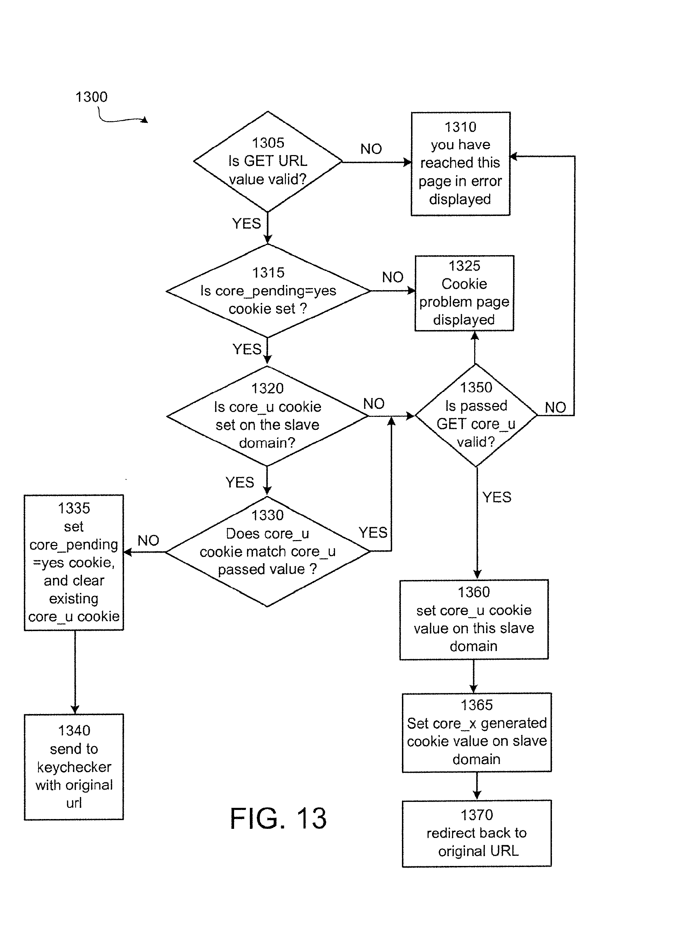

FIG. 13 illustrates process 1300 for the keyslave tool that resides on any non-keymaster domain. A determination is made whether a GET URL value is valid (e.g., valid origin URL) (operation 1305). If GET URL value is not valid, then user is presented with an error page (operation 1310). If a valid GET URL value exists, then a determination is made whether core_pending cookie is set to true (e.g., yes) (operation 1315). If core_pending is not set to true, then user is given an error page pertaining to cookies (operation 1325). If core_pending cookie is true, then a determination is made whether core_u cookie is set on this slave domain (operation 1320). If the core_u cookie is not set, then a determination is made whether a valid keep has been passed (e.g., transmitted) (operation 1350). If the core_u passed is not valid, then user is presented with a cookie error page (operation 1325).

If a valid core_u is passed (e.g., transmitted), then core_u is set as a cookie on this slave domain (operation 1360). Core_x cookie verification value is generated on the slave domain (e.g., based on a hash algorithm, such as using core_u, secret key, and browser type) (operation 1365). The user is redirected to origin URL (operation 1370).

If a core_u cookie is set on the slave domain (operation 1320), then a determination is made whether the core_u cookie matches the core_u value passed (operation 1330). If core_u cookie matches core_u passed value, then a determination is made whether a valid core_u has been passed (operation 1350) and operations 1325, 1310, and/or 1360-1370 may be performed

If the core_u cookie does not match the core_u value passed, then a core_pending cookie is set to true (e.g., yes) and any existing core_u cookie is cleared (operation 1335). The user is then redirected to keychecker on keyslave domain with original URL (operation 1330).

If a valid core_u was determined (operation 1350), then core_u is set as a cookie on this slave domain (operation 1360). Then a core_x cookie verification value is generated based on the common hash algorithm such as using core_u, secret key, and browser type (operation 1365). Then user is redirected back to origin URL (operation 1370) all this has happened transparently to the user.

If a core_u cookie was found on the slave domain (operation 1320), then the core_u cookie is compared to the core_u value passed (operation 1330). If they match, then a determination is made to see if a valid core_u has been passed (operation 1350). If the core_u passed is not valid then user is presented with a cookie error page (operation 1325).

If a valid core_u was determined (operation 1350), then core_u is set as cookie on this slave domain (operation 1360). Then a core_x cookie verification value is generated based on the common hash algorithm such as using core_u, secret key, and browser type (operation 1365). Then user is redirected back to origin URL (operation 1370) and all this has happened transparently to the user.

If the core_u cookie did not match the core_u value passed (operation 1330) then a core_pending cookie is set to true and any existing core_u cookie is cleared (operation 1335). The user is then redirected to keychecker tool on keyslave domain with original URL (operation 1340).

In some implementations, a user may access a website for social networking via a user device such as a personal computer, touch screen terminal, workstation, network computer, kiosk, wireless data port, smart phone, cellular phone, personal data assistant (PDA), one or more processors within these or other devices, or any other suitable processing device. For example, a user may use a PDA operable to wirelessly connect with a website. The user device may include fixed or removable memory such as a magnetic computer disk, CD-ROM, or other suitable media to both receive input from and provide output to users of clients through the display, namely the user portion of (graphical user interface) GUI or application interface.

If the user is already registered as a member of the social network (e.g., of the group to which the website is a part of), then the website may present the user with a sign-in portion and grants the user access to website. The sign-in portion may include or present a user name field for an email address a prompt if remembering access is desired, and field is pre-populated with user's address. Sign-in portion also may include a password field that may be user-specified and hint available if the user forgets. This password may first be sent through email and be as complex as necessary to help assure security. Two-factor type authentication may be used to increase security with a secure token device, such as an RSA token. The sign-in portion or the first page of the website after authentication may also display messages, members currently online, promotions, targeted advertising, etc.

If the user is not a registered user, then the website may present a general registration process that the new user may follow to become a member of the social network. For example, such registration may include steps, such as requesting user information, sign-in information, business information, and business profile information. This information may include the registrant's first and last name, the registrant's email address (typically used as username for sign in and provides immediately-useful contact information), hobbies, interests, groups of social networks a user would like to join, etc. This information may be collected and/or sign-in information may be verified (e.g., is the username for sign-in available) with the authentication system. This sign in information may include the registrant's password (perhaps entered twice to ensure accuracy), a password hint, and the registrant's personal identification information to enable support to verify user.

In some implementations, users may be able to select, own and control their own domain identity as a member of the social network. By controlling the domain identity associated with membership, members of a cross-domain social networking site create a more personal extension of their offline identities for the virtual community. The result is a stronger bond between members and the site. One of the driving forces for individuals seeking online social networking is personalized expression of themselves as an individual (even if within a targeted audience). Therefore, allowing members to own and control their domain identities substantially enhances the experience members are seeking.

In addition, companies associated with a site employing cross-domain social networking offer advertising and business partners a more substantial relationship with its members since member retention may be enhanced since a user may use any domain to host his/her site. This allows business partners of the social network to form and maintain relationships with members of the network over time.

Currently, traditional advertising models apply to social networks. Such models attempt to generate revenue by providing static ads (e.g., banner ads, sponsored links, etc.) or the like with sites. The method and system of the present invention provides business partners, like advertisers, the opportunity to market to members on a much more personal level, interacting directly with members through the social network. The experience with these partners is also shared between members within the virtual community. Essentially, the network acts as a channel through which information is passed, on the ground level, from the business partner to the market (members), with the market (members) acting as the promoters. This feature provides a greater level of trust and acceptance of the information being provided.

In some implementations, a business partner of the network can provide its brand and "plug in" that brand to the social networking world without the need to develop and/or invest in capital infrastructure, etc. Such leverage can be used to promote brand awareness, emotional bonding, loyalty and brand extension. Once members are provided the right brand (i.e., one aligned with the target audience), the creative control and connectivity of the network will keep the members coming back to that brand, drive new user recommendations, and ultimately support growth of the network beyond branded communities.

The cross-domain social network method and system allows members to select, own and control their own personal domain (and all the functionality and freedom to accompany that), as well as the ability to link to other sites and even networks, acting as a "hub" through which all other networking are joined.

With maturity, the social network will act as a collection of "group voice" sites. Each member's page is: (1) an individual hub through which all online connections are managed; (2) an online identity - a dedicated space for close friends to share content and discuss information in a highly personal manner; (3) a tightly-linked part of the greater whole that becomes a "group voice"; (4) a way to link groups based on shared interests (and sub-interests); and (5) a powerful vehicle for brands to embed themselves in the relevant member culture and receive intelligence on relevant trends before they emerge in the greater population.

In addition, by allowing personalizing of user sites via selection, ownership and control of domains, members are creating stronger extensions of their identities in the digital world. The content (text, thoughts, pictures, video, etc.) posted, and the ease with which it can be posted and manipulated, will create a very tight bond between members and their sites. Merely having a self-selected domain identity will greatly enhance this significant outlet of self-expression. The strength of technical backend of the network allows for unlimited expression potential - from video, to music, to unlimited content, the network creates an environment of uninhibited, completely customized expression.

Furthermore, while many users may be computer literate, others may not posses the technical skills to create a web page from scratch. Even use of existing software and systems to facilitate such creation is daunting enough to prevent most from trying. As a result, the ability to truly personalize a site, and provide robust content, is severely limited. The more content individuals have, the more resources they have to promote their site and attract visitors. Thus, web site building tools may be included that are easy-to-use and allow the user to be as creative as he or she wishes while not requiring extensive technical skills. Allowing users that desire individualized websites the freedom to create and retain an identity while also allowing users with more limited website building skills allow creation of a larger social network with broad mass market appeal.

Members may be able to easily and effectively interact with one another. Socialization drives internal traffic on the network by increasing time spent browsing the network. Furthermore, socialization encourages members to bring more of their personal social networks from the Internet and from the tangible world into the online network. One way the current invention facilitates this is through ease of searching for other members with shared interests.

The explosive growth of web logs ("blogs") and social networks merely reflects the unmet demand for self-expression - people want as much control over personalization of their sites as possible, but want their sites to be attractive as well. A social network system may include tools for members to use to provide optimal customization in a form that also facilitates an attractive result. In prior art networks, members must use "hacks" that are unattractive in any attempt to provide customization. A powerful blog system, unlimited content, ease of music integration, a highly customizable style system, and personalized domain (e.g., theirname.com) work in concert to provide individualized customization without sacrificing overall attractiveness. Cascading Style Sheets (CSS) are used by the present invention system to provide stable, more attractive customization of content. Importantly, such customization is search engine-friendly. From templates to true customization, the network system and method offers the novice to the professional graphic artists the chance to create dazzling sites. Additionally, the use of CSS allows content from the network to be available on a range of devices, from computers to cell phones to PDAs.

In addition, image represents the market's perception of the network. A network of the social network system allows the preservation of an individual member's independent creative integrity, while allowing businesses an effective advertising outlet. The flexibility of the network also creates an image that can adapt and evolve with the members, as well as present multiple images at once to different audiences.

The software and hardware behind the social network may allow greater flexibility than existing social network sites. Employing same, the network does not experience features breaks and site lags, allowing virtually unlimited growth. Additionally, such design allows the network to push out new features or updates to current members without causing massive instability or downtime to the overall system.

Professional hosting means that members have access to more powerful modules and scripts than they would on social network sites that require sites to be hosted on their domain, and the flexibility allows users to embed features from their other social sites or trinket sites that provide music, small flash games, or polls directly into their network without the need for complicated and unattractive "hacks" necessary on the other networks.

Although a user has been described as a human, a user may be a person, a group of people, a person or persons interacting with one or more computers, and/or a computer system.

Certain users may be excluded from the authentication process as not being real users that would socially interact such as web crawlers or robots processing public information on the network (e.g., Google robot that is indexing network content). These robots would not be shown private content but presented options to authenticate but may be presented with content that an anonymous user could view from the various sources. This may allow support of indexing and web crawling without causing repeated failed login attempts and other performance issues.

Various forms of encryption or security levels may be used to increase security of logon and/or portions of a website as desired. For example, SSL, 64-bit, private and/or public key, and/or any appropriate form of encryption may be used. As another example, rotating session IDs may also be used (e.g., transparently to the user) to increase the security of the system. A user's session ID is continually changed within some time period to prevent unauthorized parties from trying to guess or utilize a user's session ID.

Repeated Authentication failures, bad cookie verification values, and other values could be used to restrict or block (temporarily or permanently) certain client IP addresses or other defining remote characteristics. Again various security levels could be used.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementations in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display)) monitor for displaying information to the user and a keyboard and a pointing device (e.g., a mouse or a trackball) by which the user can provide input to the computer. Other kinds of devices can be used to provide for interaction with a user as well; for example, feedback provided to the user by an output device can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

Client is any computing device operable to connect or communicate with server or network using any communication link. At a high level, each client includes or executes at least GUI and comprises an electronic computing device operable to receive, transmit, process and store any appropriate data associated with system. It will be understood that there may be any number of clients communicably coupled to server. Further, "client," "business," and "user" may be used interchangeably as appropriate without departing from the scope of this disclosure. Moreover, for ease of illustration, each client is described in terms of being used by one user. But this disclosure contemplates that many users may use one computer or that one user may use multiple computers.

The computing system may include or be coupled to servers or server pools, clients, service providers or vendors, and/or users. A server may include an electronic computing device operable to receive, transmit, process, and store data associated with the system. A server may be any computer or processing device such as, for example, a blade server, a general purpose personal computer, a Macintosh, a workstation, a Unix-based computer, or any other suitable device. A server may include a web server and/or a mail server. The present disclosure contemplates computers other than general purpose computers as well as computers without conventional operating systems. Server 102 may be adapted to execute any operating system including Linux, UNIX, Windows Server, or any other suitable operating system.

The server may be coupled to a local memory or remote repository. A memory may include any memory or database module and may take the form of volatile or non-volatile memory including, without limitation, magnetic media, optical media, random access memory (RAM), read-only memory (ROM), removable media, or any other suitable local or remote memory component. A memory may include any appropriate data such as presentation elements, user context profiles, VPN applications or services, firewall policies, a security or access log, print or other reporting files, HTML files or templates, data classes or object interfaces, child software applications or sub-systems, and others.

A repository is any intra-enterprise, inter-enterprise, regional, nationwide, or substantially national electronic storage facility, data processing center, or archive that allows for one or a plurality of clients and/or servers to dynamically store and retrieve data, which may include any business, enterprise, application or other transaction data and metadata.

Regardless of the particular implementation, "software" may include software, firmware, wired or programmed hardware, or any combination thereof as appropriate. Indeed, software may be written or described in any appropriate computer language including C, C++, Java, Visual Basic, assembler, Perl, any suitable version of 4GL, as well as others. For example, the software may be implemented as Enterprise Java Beans (EJBs) or the design-time components may have the ability to generate run-time implementations into different platforms, such as J2EE (Java 2 Platform, Enterprise Edition), ABAP (Advanced Business Application Programming) objects, or Microsoft's .NET.

Although a user has been described as a human, a user may be a person, a group of people, a person or persons interacting with one or more computers, and/or a computer system, as appropriate.

The preceding flowcharts and accompanying description illustrate exemplary processes 300, 500, 700, 800, 900, and 1300. System 100 contemplates using or implementing any suitable techniques for performing these and other tasks. It is to be understood that these processes are for illustration purposes only and that described or similar techniques may be performed at any appropriate time, including concurrently, individually, or in combination. In addition, many of the steps in these flowcharts may take place in different orders than shown. Moreover, system 100 may use processes with additional steps, fewer steps, and/or different steps, so long as the methods remain appropriate. Accordingly, other implementations are within the scope of this application.

It is to be understood the invention is not limited to particular systems or processes described which may, of course, vary. It is also to be understood that the terminology used herein is for the purpose of describing particular embodiments only, and is not intended to be limiting. As used in this specification, the singular forms "a", "an" and "the" include plural referents unless the content clearly indicates otherwise. Thus, for example, reference to "a memory" includes a combination of two or more memories and reference to "a media" includes mixtures of different types of media

Although the present invention is defined in the attached claims, it is to be understood that the invention can alternatively also be defined in accordance with the following embodiments:

### Embodiments:

1. A method of social networking comprising:
   receiving a request from a user for access to a first website coupled to an authentication system;
   automatically determining whether the user is logged on to the authentication system, wherein the authentication system is configured to automatically allow the user to be logged on to a second website coupled to the authentication system and on a different domain from the first website when the user is logged on to the first website;
   presenting a first webpage on the first website configured to allow the user to log on to the authentication system if the user is not logged on; and
   presenting a second webpage on the first website based at least in part on user information, wherein at least a portion of content of the second webpage is based on an authorization status of the user.
2. The method of embodiment 1, further comprising automatically logging the user out of the authentication system after a predetermined period of time.
3. The method of embodiment 1, further comprising presenting a third webpage associated with the second webpage based at least in part on the user information, wherein at least a portion of content of the second webpage is based on the authorization status of the user.
4. The method of embodiment 1, wherein the first webpage comprises the second webpage with an embedded portion configured to allow the user to log on to the authentication system.
5. The method of embodiment 1, wherein the second webpage comprises messages for the user.
6. The method of embodiment 1, further comprising allowing the user on the first website to communicate with a second user on the second website.
7. The method of embodiment 1, further comprising allowing the user on the second website to communicate with a second user on the second website.
8. The method of embodiment 1, wherein the user is a member of at least one social network group and further comprising allowing the user to communicate with other users in a particular one of the social network groups.
9. The method of embodiment 1, wherein the social network comprises a plurality of nodes, and wherein each node comprises a plurality of users, and wherein at least one of the nodes comprises the user, and wherein the user is capable of communicating with a second user in the same node as the user and/or in a different node from the user.
10. The method of embodiment 1, further comprising determining a peer group of a user based on the user identification, and generating at least a portion of the website based on the peer group.
11. The method of embodiment 1, wherein the authentication system is at least partially stored remotely (define as not the domain hosting server).
12. The method of embodiment 1, wherein determining whether the user is logged on to the authentication system comprises transmitting an HTTP call to the authentication system.
13. The method of embodiment 1, wherein determining whether the user is logged on to the authentication system comprises determining whether a cookie is stored on the user's system that indicates the authorization status of the user.
14. The method of embodiment 1, wherein determining whether the user is logged on to the authentication system comprises determining if a cookie comprising the authorization status of the user exists on the domain of the first website.
15. The method of embodiment 1, wherein the user is logged on to the authentication system, further comprising:
   receiving a request for access to a third website from the user, wherein the authorization system is associated with a third website; and
   automatically logging the user on to the third website.
16. Software comprising a computer-readable instructions operable when executed to:
   receive a request from a user for access to a first website coupled to an authentication system;
   automatically determine whether the user is logged on to the authentication system, wherein the authentication system is configured to automatically allow the user to be logged on to a second website coupled to the authentication system and on a different domain from the first website when the user is logged on to the first website;
   present a first webpage on the first website configured to allow the user to log on to the authentication system if the user is not logged on; and
   present a second webpage on the first website based at least in part on user information, wherein at least a portion of content of the second webpage is based on an authorization status of the user.
17. A system for providing sponsored content for use with a business application, comprising:
   a processor; and
   a memory coupled to the processor, the memory storing program instructions operable to:
      receive a request from a user for access to a first website coupled to an authentication system;
      automatically determine whether the user is logged on to the authentication system, wherein the authentication system is configured to automatically allow the user to be logged on to a second website coupled to the authentication system and on a different domain from the first website when the user is logged on to the first website;
      present a first webpage on the first website configured to allow the user to log on to the authentication system if the user is not logged on; and
      present a second webpage on the first website based at least in part on user information, wherein at least a portion of content of the second webpage is based on an authorization status of the user.

A number of implementations have been described. Nevertheless, it will be understood that various modifications may be made without departing from the spirit and scope of the following claims. Accordingly, other implementations are within the scope of the following claims:

## Claims

1. A method of social networking comprising:
receiving a request from a user for access to a first website coupled to an authentication system;
automatically determining whether the user is logged on to the authentication system, wherein the authentication system is configured to automatically allow the user to be logged on to a second website coupled to the authentication system and on a different domain from the first website when the user is logged on to the first website;
presenting a first webpage on the first website configured to allow the user to log on to the authentication system if the user is not logged on; and
presenting a second webpage on the first website based at least in part on user information including one or more of: messages for the user, a photo of the user, an avatar of the user, listings a portion of the members of a logged on user's group, logged on members, listing of members a user commonly communicates with, and a selected group of members; and
wherein at least a portion of content of the second webpage is based on an authorization status of the user.

2. The method of claim 1, further comprising presenting a third webpage associated with the second webpage based at least in part on the user information, wherein at least a portion of content of the third webpage is based on the authorization status of the user.

3. The method of claim 1, wherein the first webpage comprises the second webpage with an embedded portion configured to allow the user to log on to the authentication system.

4. The method of claim 1, further comprising allowing the user on the first website to communicate with a second user on the second website.

5. The method of claim 1, further comprising allowing the user on the second website to communicate with a second user on the second website.

6. The method of claim 1, wherein the user is a member of at least one social network group and further comprising allowing the user to communicate with other users in a particular one of the social network groups.

7. The method of claim 1, wherein the social network comprises a plurality of nodes, and wherein each node comprises a plurality of users, and wherein at least one of the nodes comprises the user, and wherein the user is capable of communicating with a second user in the same node as the user and/or in a different node from the user.

8. The method of claim 1, further comprising determining a peer group of a user based on the user identification, and generating at least a portion of the website based on the peer group.

9. The method of claim 1, wherein the authentication system is at least partially stored on a different domain hosting server.

10. The method of claim 1, wherein determining whether the user is logged on to the authentication system comprises transmitting an HTTP call to the authentication system.

11. The method of claim 1, wherein determining whether the user is logged on to the authentication system comprises determining whether a cookie is stored on the user's system that indicates the authorization status of the user.

12. The method of claim 1, wherein determining whether the user is logged on to the authentication system comprises determining if a cookie comprising the authorization status of the user exists on the domain of the first website.

13. The method of claim 1, wherein the user is logged on to the authentication system, further comprising:
receiving a request for access to a third website from the user, wherein the authorization system is associated with a third website; and
automatically logging the user on to the third website.

14. Software comprising a computer-readable instructions operable when executed to:
receive a request from a user for access to a first website coupled to an authentication system;
automatically determine whether the user is logged on to the authentication system, wherein the authentication system is configured to automatically allow the user to be logged on to a second website coupled to the authentication system and on a different domain from the first website when the user is logged on to the first website;
present a first webpage on the first website configured to allow the user to log on to the authentication system if the user is not logged on; and
present a second webpage on the first website based at least in part on user information, wherein at least a portion of content of the second webpage is based on an authorization status of the user.

15. The software of claim 14, wherein the second webpage is based at least in part on user information including one or more of: messages for the user, a photo of the user, an avatar of the user, listings a portion of the members of a logged on user's group, logged on members, listing of members a user commonly communicates with, and a selected group of members.
